# EUROPEAN PATENT SPECIFICATION

(11) **EP 3 649 455 B1**
(45) Date of publication and mention of the grant of the patent: **01.03.2023**
(21) Application number: 18749629.4
(22) Date of filing: 27.06.2018
(51) Int. Cl.: G01N 3/56, G01N 30/00, G01N 17/00, G01N 23/00

(54) **OVERCOAT**
DECKSCHICHT
COUCHE DE FINITION

(30) Priority: 05.07.2017 US 201715641818
(43) Date of publication of application: 13.05.2020
(73) Proprietor: Raytheon Company, Waltham, MA 02451-1449 (US)
(72) Inventor: WILDS, Andrew M., Tucson, AZ 85756 (US); SUNDBERG, Kristin, Andover, MA 01810 (US); WHITE, Ryan D., Tucson, AZ 85756 (US)
(74) Representative: Carpmaels & Ransford LLP
(86) International application number: PCT/US2018/039659
(87) International publication number: WO 2019/010041

(56) References cited:
- WO-A1-99/24812
- WO-A2-2008/077169
- DE-A1- 10 340 489
- US-A- 2 938 125
- US-A- 3 769 511
- US-A- 3 797 896
- US-A- 5 187 542
- US-A- 5 947 053
- US-A1- 2006 166 020

## Description

### BACKGROUND

The present disclosure relates to protective coatings and, more particularly, to protective coatings that emit, absorb, and/or scatter radiation.

Traditional manufacturing technologies and additive manufacturing (AM) technologies are widely incorporated into defense industry applications. Additive Manufacturing (AM) technologies build three-dimensional (3D) objects by adding layer-upon-layer of material(s). The material(s) can be, for example, plastic, metal, concrete, or biological tissues. AM technologies use a computer, 3D modeling software (Computer Aided Design (CAD)), machinery, and layering material(s). Once a CAD sketch is produced, the AM equipment reads data from a CAD file and disposes successive layers material(s), e.g., liquid, powder, or other sheet material, in a layer-upon-layer fashion to fabricate a 3D object. AM technologies include various subsets, for example, 3D Printing, Rapid Prototyping (RP), Direct Digital Manufacturing (DDM), layered manufacturing, and additive fabrication.

The widespread incorporation of traditional manufacturing and AM technologies in the defense industry means that there needs to be some measures to ensure that parts of the supply chain are in optimal condition. Furthermore, the drive for extending the life of defense related products creates opportunities to have worn parts slipped into the supply chain. US2938125A discloses a method and means or device for determining the extent and/or pattern of surface wear of wear-resistant surfaces, such as on bearings, pistons, and cylinders of internal combustion engines, and other moving parts of machines. US3797896A discloses a bearing lined with silver, there being radioactive atom dopants of two species, neither of which need be silver, at a particular depth of the silver lining and a method of placing these radioactive atom dopants in said bearing by electrodeposition without altering the quality or bond strength of the silver lining. DE10340489A1 discloses a mill bearing wear monitoring procedure using different pairs of trace element inclusions applied to the bearing surface layers so that a measurement of the concentrations of the chemicals present in the lubricant in the oil filter or sump using X-ray spectroscopy represents the wear status. US3769511A discloses a process for measuring the service life of heat shields on re-entry spacecraft after each flight. A low electron-energy level, beta emitting, isotope, having a reasonably long half-life, preferably promethium-147, is uniformly dispersed throughout a refractory heat shield coating. US5947053A discloses a wear-through detection in multilayered parts. It specifically encompasses, in one aspect, wear-through detection in semiconductor vacuum processing systems in which a wear indicator that will release a detectable constituent upon exposure to processing conditions is used inside the semiconductor vacuum processing tool. WO9924812A1 discloses a method of monitoring removal of material from an object comprising providing a solid object comprising a radioactive tracer in a predetermined pattern, providing an ambient medium with which the solid object is in contact, monitoring the ambient medium for a change in level of the radioactive tracer corresponding to removal of material from the solid object, and determining the condition of the solid object based on the change in level of the radioactive tracer in the ambient medium. US2006166020 discloses an improved method for coating turbine engine components. The method utilizes a cold high velocity gas spray technique to coat turbine blades, compressor blades, impellers, blisks, and other turbine engine components.

### SUMMARY

According to embodiments, a method of forming a coating on an article includes forming a coating including an emitting layer, as defined in claim 1. The emitting layer includes elemental isotopes with a known property that can be measured by a spectroscopic method. The elemental isotopes provide a distinguishing identification tag for the coating, and the coating providing a layer of protection to the substrate. The method further includes depositing the coating on a surface of a substrate of the article. The elemental isotopes are a blend of stable and unstable isotopes of an element that differs from a natural abundance.

Yet, according to other embodiments, a coating of an article includes an emitting layer arranged on a substrate of the article, as defined in claim 9. The emitting layer includes elemental isotopes with a known property that can be measured by a spectroscopic method. The elemental isotopes provide a distinguishing identification tag for the coating, and the coating provides a layer of protection to the substrate. The coating further includes an attenuating layer arranged on the emitting layer. The attenuating layer protects the emitting layer. The elemental isotopes are a blend of stable and unstable isotopes of an element that differs from a natural abundance.

Additional features and advantages are realized through the techniques of the present invention. Other embodiments and aspects of the invention are described in detail herein.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional side view of an emitting layer of a coating arranged on a substrate;
FIG. 2 is a cross-sectional side view of an emitting layer of a coating decaying;
FIG. 3 is a cross-sectional side view of an emitting layer of a coating emitting a gamma ray;
FIG. 4 is a cross-sectional side view of an emitting layer of a coating;
FIG. 5 is a cross-sectional side view of a coating comprising an attenuating layer arranged on an emitting layer;
FIG. 6 is a cross-sectional side view illustrating wear occurring to a coating;
FIG. 7 is a flow chart describing a method of identifying characteristics of an article using a coating;
FIG. 8 is a flow chart describing a method of determining a need for performing preventative maintenance using a coating; and
FIG. 9 is a flow chart describing a method of passively aging a coating.

### DETAILED DESCRIPTION

As will be discussed below, embodiments disclosed herein provide methods for forming protective coatings on a variety of substrates. In embodiments, methods described herein use the coatings to identify and age components safely and effectively for use domestically and abroad. In the invention, specific blends of isotopes, stable and unstable, that differ from that naturally occurring abundance ratios are used in the coating to identify the part lot, manufacturer, *etc.* In some embodiments, gamma emitting radio-isotopes, x-ray emitting radio-isotopes, or neutron scattering isotopes are admixed as nanoparticles into a bulk overcoating material.

In embodiments, using thermal and cold spray methodologies, the nanoparticles form hard undercoat that can be protected by an optional top attenuating or scattering coat. Still, in other embodiments, the coating can be a paint layer or powder coat layer, in which the nanoparticles are homogenously mixed throughout one or more overcoat layers to serve a protective monolayer for underlying hardware. The resulting coatings improve resistance to damage, such as corrosion and wear.

The coating may be used to determine the need for preventative maintenance, for example, when it is desired to service a component on a regular interval regardless of wear. The coatings described herein are advantageous because the amount of coating wear correlates with the the age of the coating. Therefore, the coating can be passively aged to determine the amount of coating wear, and therefore on the article. Many applicable to items have a life limit (expiration date) regardless of wear. Identifying heavy wear on components is particularly useful for military and defense part applications, as well as in commercial applications.

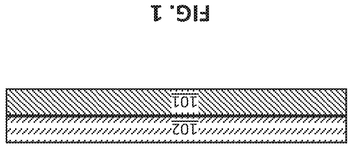

Turning now to the Figures, FIG. 1 is a cross-sectional side view of an emitting layer 102 of a coating arranged on a surface of a substrate 101 according to embodiments. The coating protects the substrate 101 of the article. The substrate 101 can include any bulk material. The substrate 101 shown is not drawn to size, shape, or scale, and is only shown for illustrative purposes. The substrate 101 is intended to be a part or whole of any type of article. The substrate 101 can be formed by any suitable methods, for example, traditional manufacturing methods or AM. The substrate 101 is part of a microchip and integrated circuit in embodiments. In other embodiments, the substrate 101 can form part of an article (or device), such as an optical device, turbine engine fan blade, detector, or any other device, for example. While such elements are given as examples herein, the techniques and methods disclosed herein may be used, in whole or in part, with many materials whether it is electrically active or not. The material or materials forming the substrate 101 are not limited to any particular type or property. In some exemplary embodiments, the substrate 101 includes one or more of a conductive material, a semiconductor material, or an insulating material. The substrate 101 can be an article used in the defense sector, for example, wherein preventative maintenance with respect to wearing and corrosion is routinely performed. The substrate 101 also can be an article used in the commercial sector. In exemplary embodiments, the substrate 101 can be part of a car engine, such as a part of the inside of a piston. Although, the substrate 101 is not limited to these examples.

The coating on the substrate 101 can include a single emitting layer 102. The emitting layer 102 can also include one or more layers. The emitting layer 102 of the coating includes elemental isotopes with known properties that can be measured an analyzed by a spectroscopic method. The emitting layer 102 includes a blend of stable and unstable isotopes of an element that differs from a natural abundance, which will be described in further detail below. The isotopes provide a unique signature, or a distinguishing identification tag for the coating that may be observed by various atomic level measurement techniques, for example, mass spectrometry, a gamma ray spectroscopy, scintillation detection, or neutron spectroscopy.

The emitting layer 102 forms a base coating layer directly on the substrate 101 according to one or more embodiments. In other embodiments, intermediate layers are formed between the substrate 101 and the emitting layer 102 (not shown). The emitting layer 102 includes particles that are micron-sized or nano-sized emitting particles. The particles may stand alone, being deposited directly onto the substrate 101 to form the entire emitting layer 102, or may be mixed with a metal binder to form a powder.

The emitting layer 102 can be formed by any desired method, which depends on the substrate 101, desired properties of the coating, and the particular use of the substrate 101. Examples of methods for forming the emitting layer 102 include, but are not limited to, painting, powder coating, primer methods, epoxy methods, RTV methods, thermal spraying, cold spraying, vapor deposition, liquid deposition, and electrolytic coating methods.

The emitting layer 102 is thick enough or thin enough such that it covers an entire surface (or in some cases limited to a critical feature/surface) of the substrate 101. The thickness of the emitting layer 102 generally varies and is not intended to be limited. The thickness of the emitting layer 102 is tailorable and depends on the amount of time that the emitting layer 102 is desired to be maintained. According to one or more embodiments, the emitting layer 102 is an atomic monolayer. The emitting layer 102 can be very thick, depending on the application, and therefore, the thickness of the emitting layer 102 is not intended to be limited. The emitting layer 102 does not have to be a uniform thickness, and in some embodiments, the emitting layer 102 has a non-uniform thickness.

As mentioned above, cold spraying is one method of forming the emitting layer 102. Briefly, the cold spray process includes dispensing a powder of micron-sized or nano-sized emitting particles into a feeder of a cold spray machine. The particles can stand alone or be coated with a metal binder to form a micron-sized powder. The particles are combined with pressurized gas and accelerated at a high velocity, such as about 500-1500 m/s, and a low temperature, such as about 100 to 550°C, at a substrate. The high velocity allows for plastic deformation to adhere the particles to the substrate, forming a coating of the emitting layer 102.

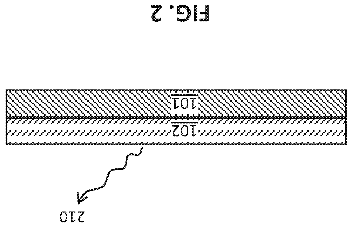

FIG. 2 is a cross-sectional side view of an emitting layer 102 of a coating decaying according to embodiments. The emitting layer 102 emits a signal 210 that is measured and detected by analytical spectroscopic methods, depending on the composition of the emitting layer 102. The emitting layer 102 includes a blend of stable and unstable isotopes of an element that differs from a natural abundance. In some embodiments, the emitting layer 102 includes one or more unstable isotopes, such as a gamma ray emitting isotope, or a blend of gamma ray emitting isotopes. Yet, in other embodiments, the emitting layer 102 includes one or more neutron capturing or scattering isotopes.

The signal 210 can be an isotopic signature that is detected by mass spectrometry, for example. Unique isotopic signatures are used as a distinguishing identification tag that indicates a property of the coating such as where the coating was made (a source of the coating or the manufacturer), when the coating was made, and/or what the coating includes, for example. The unique isotopic signature can also provide a means of identifying information about the part, such as the serial number, model number, etc. The isotopic signature is made unique and identifiable by altering the ratio of stable and unstable isotopes.

The nucleus of each atom of an element includes protons and neutrons. The number of protons defines the element (*e.g.,* hydrogen, carbon, *etc*.)*,* and the sum of the protons and neutrons provides the atomic mass. The number of neutrons defines the isotope of that element. For example, most carbon (≈ 99 %) has 6 protons and 6 neutrons and is written as ¹²C to reflect its atomic mass. However, about 1 % of the carbon in the Earth's biosphere has 6 protons and 7 neutrons (¹³C), forming the heavy stable isotope of carbon. Stable isotopes of an element do not decay into other elements. In contrast, radioactive isotopes (*e*.*g*., ¹⁴C) are unstable isotopes and will decay into other elements.

The less abundant stable isotope(s) of an element have one or two additional neutrons than protons, and thus are heavier than the more common stable isotope for those elements. Both heavy and light stable isotopes participate freely in chemical reactions and in biological and geochemical processes. However, the rate at which heavy and light stable isotopes react during physical or chemical reactions differs. The chemical bonds and attractive forces of atoms with heavy stable isotopes are stronger than those in the more common, lighter isotopes of an element. As a result, the heavier isotopes react more slowly than the lighter isotopes, leading to isotopic separation or fractionation between reactant and product in both physical and biological reactions. Fractionation of the heavy and light stable isotopes is important because it produces variation in the stable isotope ratio of different element pools and establishes an isotopic signal that can indicate the existence or magnitude of key processes involved with elemental cycling.

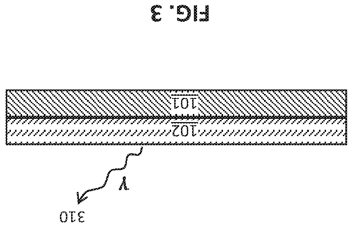

The isotopic signature, and signal 210, including the relative frequencies of stable and unstable isotopes, of an element can be artificially augmented in the emitting layer 102. The ratio of the isotopes can be determined by mass spectrometry, for example. The isotopic signature of the emitting layer is altered by introducing a combination of synthetic stable and unstable isotopic variations of an element, such as, for example, americium, polonium, plutonium, carbon, or a combination thereof. Stable isotopes are used in combination with unstable isotopes, as described below in FIG. 3.

To use the coating as a distinguishing identification tag for the article, spectroscopic analysis is performed on the coating. The signal (or spectral feature) received from the analysis is compared to a known signal (or spectral feature) of the coating that is known and determined at the time of original formation of the coating on the article. The comparison provides unique identifying information about the coating and therefore the article itself.

FIG. 3 is a cross-sectional side view of an emitting layer 102 of a coating emitting a gamma ray 310 according to embodiments. The gamma ray 310 results from emission, or decay, of an unstable or metastable isotope of an element, with a characteristic fraction of events emitting gamma rays 310 of a specific energy. The unstable or metastable isotope is an emissive tag for the coating.

The gamma ray 310 emitting isotopes may be relatively short-lived radioactive isotopes and may be added in just about any amount, provided that they provide useful emission rates and safe handling. According to one or more embodiments, the gamma ray emitting isotope may be added in a range of parts per million to fractional parts per billion. Each isotope may produce a characteristic energy (or energies) for the photons emitted. It is this spectral character of the outputs that allows identification of specific nuclear material that is in the item. The unique spectrum can be analyzed using, for example, a scintillation detector or another radiation detector. Some non-limiting examples of gamma ray 310 emitting isotopes include Barium-133, Calcium-109, Cobalt-57, Europium-152, Manganese-54, Sodium-22, Lead-210, and Zinc-65.

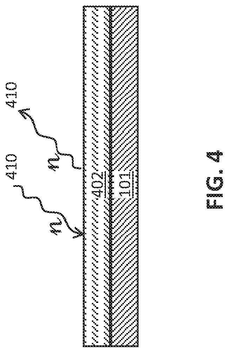

FIG. 4 is a cross-sectional side view of a layer 402 of a coating according to embodiments. The layer 402 includes a neutron 410 scattering and/or a neutron absorbing/capturing element. The neutron 410 scattering or capturing element can be, but is not limited to, Boron¹⁰, Erbium, Gadolinium, Molybdenum, Titanium, Ytterbium, Cadmium, Dysprosium, Europium, Hafnium, Samarium, or Xenon.

When layer 402 is bombarded with neutrons 410, the layer 402 captures or scatters the neutrons. Analysis can be performed to determine the layer thickness of an attenuating layer having a known chemical composition. Understanding the part substrate material composition and thickness, the emitting layer composition and thickness, and then the composition of the attenuating layer will allow the calculation of the thickness of the attenuating layer. Such analysis could be performed, for example, with a Monte-Carlo simulation, such as Los Alamos National Lab's Monte Carlo Neutral Particle analysis tool. When such an analysis is performed, backscattering is also considered. The radiated layer scatters into the actual part and then reflects back to the detector, and therefore, a combination of direct impingement, scatter, and backscatter are being detected. In order to accurately determine the thickness of the layer 402, the material forming the part are known in fine detail, including the source layer, and substrate chemical composition and thickness.

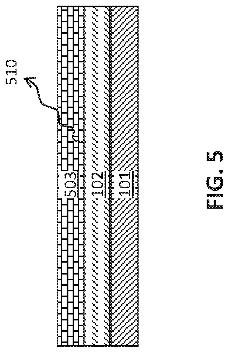

FIG. 5 is a cross-sectional side view of a coating comprising an attenuating layer 503 arranged on an emitting layer 102 according to embodiments. One or more attenuating layers 503 are included in the coating. The attenuating layer 503 protects the emitting layer 102 and the substrate 101 from general wear and tear, and although not required, may be desirable. Even when an attenuating layer 503 is present on the emitting layer 102, emission from a radioactive element emitting a signal 510 in the emitting layer 102 can still be detected. According to one or more embodiments, the attenuations layer 503 is a pristine attenuating layer, with high attenuation.

The attenuating layer 503 can include one or more layers that are the same or different. The composition of the attenuating layer 503 depends on the composition of the emitting layer 102. The attenuating layer 503 can include a micron sized or nano sized metallic powder with attenuating characteristics, for example. The attenuating layer 503 can also have gamma ray or neutron capturing properties. Other non-limiting examples of materials for the attenuating layer 503 include Teflon, lacquers, plastics, paints, or a combination thereof.

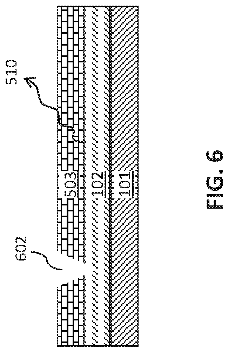

FIG. 6 is a cross-sectional side view illustrating wear occurring in the attenuating layer 503 of a coating according to embodiments. The attenuating layer 503 is a damaged/worn attenuating layer, with low attenuation.

The crack 602 is shown to generally illustrate the wear and tear that can occur. As the attenuating layer 503 becomes worn, or cracked, a stronger signal 510 from the emitting layer 102 will be detected. The signal indicates the degree of wear on the attenuating layer 503 and can serve as a warning that the device is in need of preventative maintenance.

If the coating is used to determine a need for preventative maintenance, a spectroscopic analysis is performed on a portion of the article comprising the coating. Spectroscopic methods allow enable isolation of signals from sources selected for the coating, which serves as a method rejecting noise from background radiation sources. The resulting signal of all the primary and any secondary daughter products is compared to the "as manufactured" data, and an assessment for attenuating layer thickness is possible. For example, a signal received from the spectroscopic analysis is compared to a known signal, such as a calibration curve. Based on the comparison, it is then determined whether the coating protecting the substrate has been worn and therefore whether the article needs to be replaced or needs maintenance.

In embodiments in which an attenuating layer 503 is included in the coating, a signal received from the spectroscopic analysis increases as the attenuating layer wears and thins.

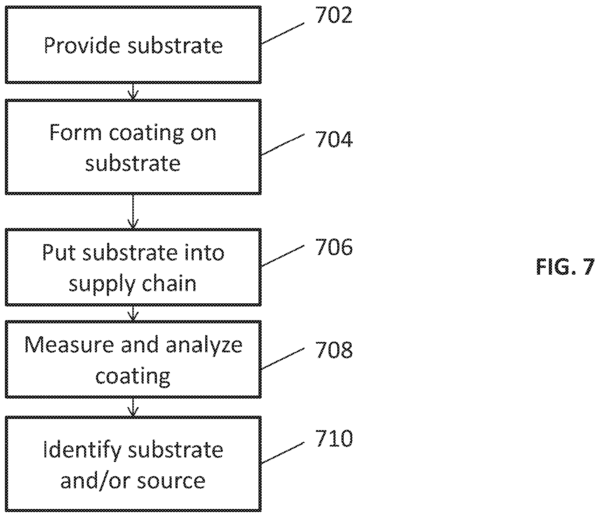

Any of the above embodiments described in FIGS. 1-6 can be employed independently or in combination with one another to form the coating described herein. Furthermore, any of the embodiments of the coatings described in FIGS. 1-6 can be employed with the following methods described in FIGS. 7-9. A blend of stable and unstable isotopes of an element that differs from a natural abundance is included in the coating.

FIG. 7 is a flow chart describing a method of identifying characteristics of an article using a coating according to embodiments. In box 702, a substrate is provided. As described above, the substrate can include any one or more materials and can form a part of any article. In box 704, a coating is formed on the substrate. Any of the coatings described in FIGS. 1-6 can be employed independently or in combination. In box 706, the coated substrate 706 is put into a manufacturing supply chain, which can be used to manufacture a larger part or device. Alternatively, the substrate itself may be entirely coated with the coating to form a final article. In box 708, an atomic level property of the coating is measured and analyzed, for example, by a spectroscopic method. In box 710, characteristics of the substrate are identified, such as the source of the substrate, the lot, the manufacturer, *etc.*

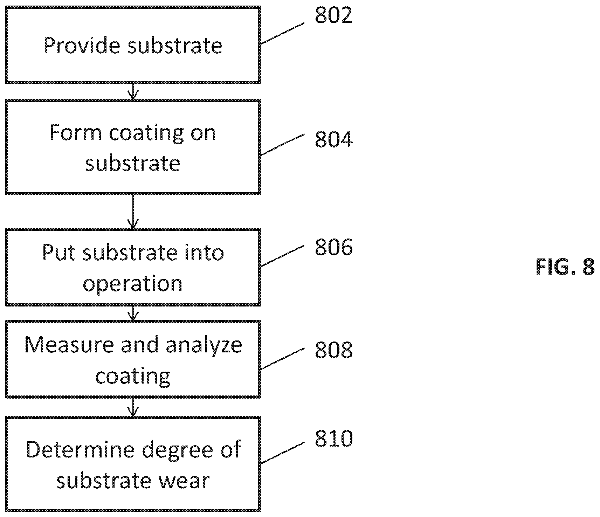

FIG. 8 is a flow chart describing a method of determining a need for performing preventative maintenance using a coating. In box 802, a substrate is provided. As described above, the substrate can include any one or more materials and can form a part of any device. In box 804, a coating is formed on the substrate. Any of the coatings described in FIGS. 1-6 can be employed independently or in combination. In box 806, the coated substrate is put into operation, alone or as part of a larger article. In box 808, an atomic level property of the coating is measured and analyzed, for example, by a spectroscopic method. In box 810, the degree of wear on the substrate is determined.

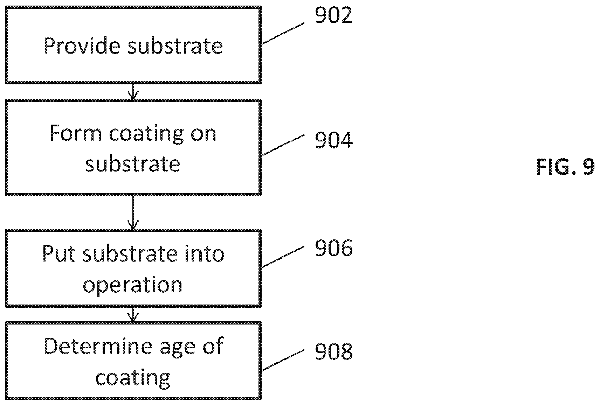

FIG. 9 is a flow chart describing a method of passively aging a coating according to embodiments. In box 902, a substrate is provided. As described above, the substrate can include any one or more materials and can form a part of any article. In box 904, a coating is formed on the substrate. Any of the coatings described in FIGS. 1-6 can be employed independently or in combination. In box 906, the coated substrate is put into operation, alone or as part of a larger article. In box 908, the age of the coating is determined.

## Claims

1. A method of forming a coating on an article, the method comprising:
forming a coating (704;804;904) comprising an emitting layer (102), the emitting layer comprising elemental isotopes with a known property that can be measured by a spectroscopic method, the elemental isotopes providing a distinguishing identification tag for the coating, and the coating providing a layer of protection to the substrate (101);
wherein the elemental isotopes are a blend of stable and unstable isotopes of an element that differs from a natural abundance; and
wherein the distinguishing identification tag is an isotopic signature made unique and identifiable by the ratio of the stable and unstable isotopes; and
depositing the coating on a surface of a substrate of the article.

2. The method of claim 1, wherein the coating is deposited by a cold spraying method.

3. The method of claim 1, wherein the coating is deposited by painting, powder coating, primer method, epoxy method, RTV method, thermal spraying, vapor deposition, liquid deposition, electrolytic coating, or a combination thereof.

4. The method of claim 1, wherein the coating further includes an attenuating layer (503) disposed on the emitting layer that protects the emitting layer.

5. The method of claim 1, wherein the unstable isotope is a gamma ray (310) emitting isotope.

6. The method of claim 1, wherein the coating comprises micron-sized particles or nano-sized particles comprising the elemental isotopes.

7. The method of claim 1, wherein the spectroscopic method is mass spectrometry, radiation detection, or a combination thereof.

8. The method of claim 1, wherein the distinguishing identification tag indicates where the coating was made, when the coating was made, what the coating comprises, provides identifying information, or a combination thereof.

9. A coating of an article, comprising:
an emitting layer (102) arranged on a substrate (101) of the article, the emitting layer comprising elemental isotopes with a known property that can be measured by a spectroscopic method, the elemental isotopes providing a distinguishing identification tag for the coating, and the coating providing a layer of protection to the substrate;
wherein the elemental isotopes are a blend of stable and unstable isotopes of an element that differs from a natural abundance; and
wherein the distinguishing identification tag is an isotopic signature made unique and identifiable by the ratio of the stable and unstable isotopes; and
an attenuating layer (503) arranged on the emitting layer, the attenuating layer protecting the emitting layer.

10. The coating of claim 9, wherein the emitting layer comprises micon sized or nano sized emitting particles or wherein the emitting layer comprises gamma ray (310) emitting particles or x-ray emitting particles.

11. The coating of claim 10, wherein the attenuating layer comprises micron sized or nano sized particles.

## Patentansprüche

1. Verfahren zur Bildung einer Beschichtung auf einem Gegenstand, wobei das Verfahren umfasst:
Bilden einer Beschichtung (704; 804; 904), die eine Emissionsschicht (102) umfasst, wobei die Emissionsschicht elementare Isotope mit einer bekannten Eigenschaft umfasst, die durch ein spektroskopisches Verfahren gemessen werden kann, wobei die elementaren Isotope ein unterscheidendes Identifizierungszeichen für die Beschichtung bereitstellen, und die Beschichtung eine Schutzschicht für das Substrat (101) bereitstellt;
wobei die elementaren Isotope ein Gemisch aus stabilen und instabilen Isotopen eines Elements sind, das sich von einer natürlichen Häufigkeit unterscheidet; und
wobei das unterscheidende Identifizierungszeichen eine Isotopensignatur ist, die durch das Verhältnis der stabilen und instabilen Isotope eindeutig und identifizierbar gemacht ist; und
Auftragen der Beschichtung auf eine Oberfläche eines Substrats des Gegenstands.

2. Verfahren nach Anspruch 1, wobei die Beschichtung durch ein Kaltspritzverfahren aufgetragen wird.

3. Verfahren nach Anspruch 1, wobei die Beschichtung durch Anstreichen, Pulverbeschichtung, Primer-Verfahren, Epoxid-Verfahren, RTV-Verfahren, thermisches Spritzen, Gasphasenabscheidung, Flüssigkeitsabscheidung, elektrolytische Beschichtung oder eine Kombination davon aufgetragen wird.

4. Verfahren nach Anspruch 1, wobei die Beschichtung ferner eine Dämpfungsschicht (503) umfasst, die auf die Emissionsschicht aufgetragen wird und die Emissionsschicht schützt.

5. Verfahren nach Anspruch 1, wobei das instabile Isotop ein Gammastrahlen (310) emittierendes Isotop ist.

6. Verfahren nach Anspruch 1, wobei die Beschichtung mikrometergroße Teilchen oder nanometergroße Teilchen umfasst, die die elementaren Isotope umfassen.

7. Verfahren nach Anspruch 1, wobei das spektroskopische Verfahren Massenspektrometrie, Strahlungsdetektion oder eine Kombination davon ist.

8. Verfahren nach Anspruch 1, wobei das unterscheidende Identifizierungszeichen anzeigt, wo die Beschichtung hergestellt wurde, wann die Beschichtung hergestellt wurde, was die Beschichtung umfasst, Identifizierungsinformationen bereitstellt oder eine Kombination davon.

9. Beschichtung eines Gegenstands, umfassend:
eine Emissionsschicht (102), die auf einem Substrat (101) des Gegenstands angeordnet ist, wobei die Emissionsschicht elementare Isotope mit einer bekannten Eigenschaft umfasst, die durch ein spektroskopisches Verfahren gemessen werden kann, wobei die elementaren Isotope ein unterscheidendes Identifizierungszeichen für die Beschichtung bereitstellen, und die Beschichtung eine Schutzschicht für das Substrat bereitstellt;
wobei die elementaren Isotope ein Gemisch aus stabilen und instabilen Isotopen eines Elements sind, das sich von einer natürlichen Häufigkeit unterscheidet; und
wobei das unterscheidende Identifizierungszeichen eine Isotopensignatur ist, die durch das Verhältnis der stabilen und instabilen Isotope eindeutig und identifizierbar gemacht ist; und
eine Dämpfungsschicht (503), die auf der Emissionsschicht angeordnet ist, wobei die Dämpfungsschicht die Emissionsschicht schützt.

10. Beschichtung nach Anspruch 9, wobei die Emissionsschicht mikrometergroße oder nanometergroße emittierende Teilchen umfasst, oder wobei die Emissionsschicht Gammastrahlen emittierende Teilchen oder Röntgenstrahlen emittierende Teilchen umfasst.

11. Beschichtung nach Anspruch 10, wobei die Dämpfungsschicht mikrometergroße oder nanometergroße Teilchen umfasst.

## Revendications

1. Procédé de formation d'un revêtement sur un article, le procédé comprenant :
la formation d'un revêtement (704 ; 804 ; 904) comprenant une couche émettrice (102), la couche émettrice comprenant des isotopes élémentaires ayant une propriété connue qui peut être mesurée par un procédé spectroscopique, les isotopes élémentaires fournissant une marque d'identification distinctive pour le revêtement, et le revêtement fournissant une couche de protection au substrat (101) ;
dans lequel les isotopes élémentaires sont un mélange d'isotopes stables et instables d'un élément qui diffère d'une teneur isotopique naturelle ; et
dans lequel la marque d'identification distinctive est une signature isotopique rendue unique et identifiable par le rapport des isotopes stables et instables ; et
le dépôt du revêtement sur une surface d'un substrat de l'article.

2. Procédé selon la revendication 1, dans lequel le revêtement est déposé par un procédé de pulvérisation à froid.

3. Procédé selon la revendication 1, dans lequel le revêtement est déposé par peinture, revêtement pulvérulent, procédé d'apprêt, procédé d'époxy, procédé RTV, pulvérisation thermique, dépôt en phase vapeur, dépôt en phase liquide, revêtement électrolytique ou une combinaison de ceux-ci.

4. Procédé selon la revendication 1, dans lequel le revêtement comprend en outre une couche d'atténuation (503) disposée sur la couche émettrice qui protège la couche émettrice.

5. Procédé selon la revendication 1, dans lequel l'isotope instable est un isotope émetteur de rayons gamma (310).

6. Procédé selon la revendication 1, dans lequel le revêtement comprend des particules de taille micrométrique ou des particules de taille nanométrique comprenant les isotopes élémentaires.

7. Procédé selon la revendication 1, dans lequel le procédé spectroscopique est la spectrométrie de masse, la détection de rayonnement ou une combinaison de celles-ci .

8. Procédé selon la revendication 1, dans lequel la marque d'identification distinctive indique l'endroit où le revêtement a été fabriqué, le moment où le revêtement a été fabriqué, ce que comprend le revêtement, fournit des informations d'identification, ou une combinaison de ceux-ci.

9. Revêtement d'un article, comprenant :
une couche émettrice (102) agencée sur un substrat (101) de l'article, la couche émettrice comprenant des isotopes élémentaires ayant une propriété connue qui peut être mesurée par un procédé spectroscopique, les isotopes élémentaires fournissant une marque d'identification distinctive pour le revêtement, et le revêtement fournissant une couche de protection au substrat ;
dans lequel les isotopes élémentaires sont un mélange d'isotopes stables et instables d'un élément qui diffère d'une teneur isotopique naturelle ; et
dans lequel la marque d'identification distinctive est une signature isotopique rendue unique et identifiable par le rapport des isotopes stables et instables ; et
une couche d'atténuation (503) agencée sur la couche émettrice, la couche d'atténuation protégeant la couche émettrice.

10. Revêtement selon la revendication 9, dans lequel la couche émettrice comprend des particules émettrices de taille micrométrique ou de taille nanométrique ou dans lequel la couche émettrice comprend des particules émettrices de rayons gamma (310) ou des particules émettrices de rayons X.

11. Revêtement selon la revendication 10, dans lequel la couche d'atténuation comprend des particules de taille micrométrique ou de taille nanométrique.
